# FASCICULE DE BREVET EUROPEEN

(11) **EP 2 340 102 B1**
(45) Date de publication et mention de la délivrance du brevet: **04.06.2014**
(21) Numéro de dépôt: 09756009.8
(22) Date de dépôt: 12.10.2009
(51) Int. Cl.: B01D 53/04, F16M 13/02

(54) **METHODE DE CONSTRUCTION APPLICABLE AUX ADSORBEURS RADIAUX DE GROSSE TAILLE**
VERFAHREN ZUR HERSTELLUNG VON GROSSEN RADIALADSORBERN
CONSTRUCTION METHOD FOR LARGE RADIAL ADSORBERS

(30) Priorité: 21.10.2008 FR 0857132
(43) Date de publication de la demande: 06.07.2011
(73) Titulaire: L'Air Liquide Société Anonyme pour l'Etude et l'Exploitation des Procédés Georges Claude, 75007 Paris (FR)
(72) Inventeur: MONEREAU, Christian, F-75011 Paris (FR); JEANNOT, Pierre, F-94480 Chennevières sur Marne (FR)
(74) Mandataire: Beroud, Amandine
(86) Numéro de dépôt international: PCT/FR2009/051938
(87) Numéro de publication internationale: WO 2010/046579

(56) Documents cités:
- FR-A- 2 887 783
- US-A1- 2003 205 130

## Description

L'invention porte sur un assemblage permettant l'assemblage horizontal d'adsorbeurs radiaux et sur le procédé d'assemblage horizontal desdits adsorbeurs.

L'adsorption est largement utilisée pour purifier ou séparer les gaz. On peut citer la séparation de n et iso paraffines, la séparation des xylènes, d'alcools, la production d'azote ou d'oxygène à partir d'air atmosphérique, le déballastage en CO2 de gaz de combustion, de gaz de hauts fourneaux....Côté épuration, on trouve les sécheurs, la purification d'hydrogène ou d'hélium, la purification de gaz riche en méthane, l'adsorption d'impuretés en traces dans de nombreux fluides (arrêt de mercure, NOx, produits soufrés ...)

Les procédés mettant en oeuvre l'adsorption sont de plusieurs types selon que l'adsorbant est régénérable ou pas in situ. On parle donc d'adsorption à charge perdue (à renouveler quand le produit est saturé en impuretés) ou de cycles d'adsorption dans l'autre cas.

Les cycles d'adsorption diffèrent en premier lieu par la façon dont l'adsorbant est régénéré.

Si la régénération se fait essentiellement par augmentation de la température, il s'agit d'un procédé TSA (Temperature Swing Adsorption = adsorption avec variation de température). Si par contre, la régénération s'effectue par baisse de la pression , il s'agit d'un procédé PSA (Pressure Swing Adsorption = adsorption à pression modulée); par procédé PSA, on entend les procédés PSA proprement-dits c'est-à-dire avec la phase d'adsorption qui s'effectue à une pression sensiblement plus élevée que la pression atmosphérique et la phase de régénération qui s'effectue à une pression un peu supérieure à la pression atmosphérique, les procédés VSA (Vacuum Swing Adsorption = adsorption à pression modulée avec mise sous vide) pour lesquels la phase d'adsorption s'effectue à une pression de l'ordre de la pression atmosphérique et la régénération sous vide, les procédés VPSA et analogues (MPSA, MSA...) avec une phase d'adsorption s'effectuant sous quelques bars et la régénération sous vide . On rattache également à cette catégorie, les système qui sont régénérés par balayage avec un gaz de purge ( ou d'élution), gaz qui peut être extérieur au procédé lui-même. Dans ce cas, on baisse en effet la pression partielles des impuretés ce qui permet leur désorption.

L'adsorbant est mis en oeuvre dans des réacteurs que l'on appellera par la suite adsorbeurs. Ces adsorbeurs sont eux aussi de différents types selon leur géométrie.

L'adsorbeur le plus simple est de forme cylindrique à axe vertical. Lorsque les débits à épurer deviennent importants, on peut utiliser des adsorbeurs cylindriques à axe horizontal.

Au delà d'un certain débit et/ou si on recherche de faibles pertes de charge et/ou si la vitesse du gaz peut être supérieure à la vitesse d'attrition (de mise en mouvement des billes) au moins dans certaines étapes du cycle, il devient intéressant d'utiliser un adsorbeur radial.

Par exemple, dès lors que les débits à purifier atteignent quelques dizaines de milliers de mètres cube réels (c'est-à-dire comptés dans les conditions opératoires), il est effectivement connu d'utiliser des adsorbeurs radiaux tel qu'il est enseigné dans le document US-A-4-541-851 ou dans le document EP 1 638 669.

Les adsorbeurs radiaux permettent en effet de réaliser de façon fiable l'épuration ou la séparation de grandes quantités de fluide en permettant du fait de leur géométrie une grande liberté de choix pour les vitesses de circulation desdits fluides, en particulier pour les rendre compatibles avec les propriétés mécaniques des particules d'adsorbant utilisées, tout en assurant une bonne distribution gazeuse à travers les masses adsorbantes. Cette flexibilité provient du fait que les sections de passage du gaz est fonction du diamètre et de la hauteur des grilles et non pas du seul diamètre comme pour un adsorbeur standard. Ils sont donc notamment utilisés pour le séchage et la décarbonatation d'air avant son fractionnement par voie cryogénique, dans le cas des VSA Oxygène et sont particulièrement bien adaptés aux VSA ou PSA CO2, unités devant traiter des débits très élevés (plusieurs centaines de milliers de Nm³/h) en basse ou moyenne pression (inférieure à 10 bar abs généralement, avec régénération à pression atmosphérique ou sous vide).

Le séchage et la décarbonatation d'air va être maintenant prise comme exemple pour décrire un cycle TSA mettant en oeuvre un tel adsorbeur de façon à illustrer son fonctionnement. Il est connu que l'air atmosphérique contient des composés devant être éliminés avant l'introduction dudit air dans les échangeurs thermiques de la boîte froide d'une unité de séparation d'air, notamment les composés dioxyde de carbone (CO₂), vapeur d'eau (H₂O), oxydes d'azote et/ou hydrocarbures par exemple.

En effet, en l'absence d'un tel prétraitement de l'air pour en éliminer ses impuretés CO₂ et eau, on assiste à une solidification en glace de ces impuretés lors du refroidissement de l'air à température cryogénique typiquement inférieure ou égale à -150°C, d'où il peut résulter des problèmes de colmatage de l'équipement, notamment les échangeurs thermiques, des colonnes de distillation...

En outre, il est également d'usage d'éliminer au moins partiellement les impuretés hydrocarbures et oxydes d'azote susceptibles d'être présentes dans l'air afin d'éviter leur trop forte concentration dans le bas de la ou des colonnes de distillation, et par là tout risque de dégradation des équipements.

Classiquement, un cycle de procédé TSA de purification d'air comporte les étapes suivantes:
a) purification de l'air par adsorption des impuretés à pression super-atmosphérique et à température ambiante,
b) dépressurisation de l'adsorbeur jusqu'à la pression atmosphérique.
c) régénération de l'adsorbant à pression atmosphérique, notamment par les gaz résiduaires, typiquement de l'azote impur provenant d'une unité de séparation d'air et réchauffé jusqu'à une température habituellement entre 100 et 250°C au moyen d'un ou plusieurs échangeurs thermiques,
d) refroidissement à température ambiante de l'adsorbant, notamment en continuant à y introduire ledit gaz résiduaire issu de l'unité de séparation d'air, mais non réchauffé,
e) repressurisation de l'adsorbeur avec de l'air purifié issu, par exemple, d'un autre adsorbeur se trouvant en phase de production ou éventuellement avec l'air à épurer.

Généralement, les dispositifs de prétraitement d'air comprennent deux adsorbeurs, fonctionnant de manière alternée, c'est-à-dire que l'un des adsorbeurs est en phase de production, pendant que l'autre est en phase de régénération.

La phase de production correspond à la purification du mélange gazeux par adsorption des impuretés.

La phase de régénération comprend les étapes de dépressurisation, chauffage, refroidissement et repressurisation.

Une étape de mise en parallèle des deux adsorbeur, de durée plus ou moins longue, c'est-à-dire de quelques secondes à plusieurs minutes, est généralement rajoutée au début ou en fin de phase de régénération.

De tels procédés TSA de purification d'air sont notamment décrit dans les documents US-A-3738084 et FR-A-7725845.

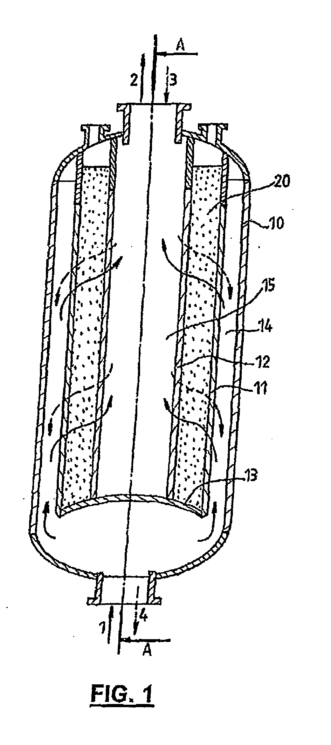

Le fonctionnement d'un adsorbeur radial pour une telle application est représenté figure 1.

Le fluide à épurer ou à séparer 1 rentre en partie basse de l'adsorbeur radial 10, traverse la masse adsorbante 20 et le fluide purifié sort en partie supérieure 2. Lors de la régénération, le fluide de régénération 3 rentre à contre-courant par la partie haute, désorbe les impuretés contenues dans la masse adsorbante 20 et le gaz résiduaire 4 sort en partie basse.

L'adsorbeur lui-même 10 est constitué d'une virole cylindrique d'axe vertical AA et de 2 fonds. La masse adsorbante est maintenue en place au moyen d'une grille externe perforée 11 et d'une grille interne également perforée 12 fixées d'un côté sur le fond supérieur et de l'autre côté, sur une tôle pleine 13 en partie inférieure. Le fluide à épurer ou à séparer 1 circule verticalement à la périphérie dans la zone libre externe 14 entre la virole cylindrique et la grille externe, traverse radialement la masse adsorbante 20 puis circule verticalement dans la zone libre interne 15 avant de quitter l'adsorbeur par le haut. La régénération s'effectue en sens inverse.

Dans la description ci-dessus, le gaz à épurer pendant la phase d'adsorption circule de la périphérie vers le centre : on parle alors de circulation centripète en adsorption. La régénération correspondante s'effectue alors de façon centrifuge, c'est-à-dire du centre vers l'extérieur. Ceci est la configuration la plus générale mais on peut utiliser de la même façon les adsorbeurs radiaux avec des sens de circulation inverses, c'est-à-dire qu'en adsorption par exemple le gaz à traiter ira de l'intérieur vers l'extérieur alors qu'en régénération, le gaz de régénération circulera de l'extérieur vers l'intérieur. Un autre arrangement possible consiste à rajouter un disque circulaire d'étanchéité pour fractionner en 2 parties la masse adsorbante. Il est alors possible dans un même adsorbeur radial d'avoir en phase d'adsorption par exemple une circulation centrifuge dans un premier volume d'adsorbant suivie d'une circulation centripète dans le volume supérieur d'adsorbant.

En pratique, le matériau adsorbant peut être constitué d'un seul et même adsorbant, par exemple de la zéolite X ou de l'alumine activée dopée, ou comprendre plusieurs lits.

Parmi les lits multiples, on peut citer les couples (alumine activée ; zéolite X), (silica gel ; zéolite X), (zéolite X, zéolite échangée)...

Il peut être aussi intéressant d'utiliser des multicouches du type (gel de silice résistant à l'eau ; gel de silice standard ou alumine activée ; zéolite X) ou du type (gel de silice ou alumine activée ; zéolite X ; zéolite échangée)...

On retrouve l'intérêt d'utiliser des multi-couches dans d'autres procédés tels les VSA O2, VSA CO2, PSA H2.

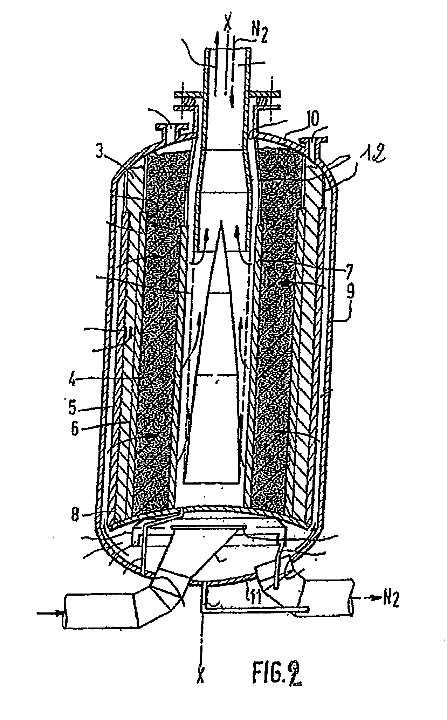

La figure 2 représente par exemple un adsorbeur radial comportant 2 couches distinctes d'adsorbants.

De façon générale, les adsorbants sont maintenus en place entre des grilles perforés. Par grille perforée, on entend un système perméable au gaz, imperméable aux particules d'adsorbants et présentant les caractéristiques mécaniques suffisantes pour assurer un fonctionnement fiable pendant plusieurs années. Une telle grille peut être composée de plusieurs éléments, par exemple une grille d'épaisseur 6 ou 8mm avec de larges ouvertures sur laquelle est plaqué un tissu métallique d'ouverture inférieure au mm. On appelle grille interne la grille la plus proche de l'axe central, grille externe la grille la plus proche de la paroi extérieure de l'adsorbeur. En fonction du nombre d'adsorbants différents utilisés, on rajoute des grilles intermédiaires. En pratique, si N est le nombre de couches d'adsorbants, on doit utiliser N-1 grilles intermédiaires, soient en tout N+1 grilles.

Ces grilles comme on l'a déjà décrit, sont perméables au gaz et comporte de ce fait de nombreuses perforations. Suivant l'application et les contraintes engendrées par les effets de température ou de pression, on peut volontairement leur donner une élasticité accrue longitudinalement ou radialement. Le document US 4,541,851 donnent des exemples de tôles perforées présentant des élasticités différentes suivant l'arrangement des perforations.

L'invention porte plus particulièrement sur la construction des dits adsorbeurs radiaux.
Pour simplifier la description, on va se limiter aux principaux éléments constitutifs d'un tel adsorbeur radial, à savoir dans notre exemple de la Figure 2 : 3 grilles perforées (5,6,7), leur base inférieure ( 8 ), les pièces de raccordements entre les grilles et un fond (12), les 2 fonds (10 et 11) et la virole extérieure ( 9 ). Ce système permet de maintenir en place les adsorbants constituant les lits de forme cylindrique (3) et (4).
Les pièces de raccordement (12) peuvent être de forme et de dimensions différentes suivant la technologie exacte retenue pour les adsorbeurs. Elles peuvent par exemple comprendre des trappes démontables pour accéder à des espaces inter-grilles ou à l'espace entre grille extérieure et virole. Dans d'autres conceptions, ce ne sont que des pièces permettant la fixation des grilles avec leurs extrémités. Elles sont généralement conçues pour éviter les cheminements préférentiels du gaz en partie supérieure.

D'autres éléments -comme par exemple un filtre dans l'espace annulaire central- ne sont pas cités dans la description des procédures de construction. Cela ne modifie pas les principes qui vont être à présent décrits et qui pour certains constituent le principe de l'invention.

Au niveau construction, chacune des grilles est constituée d'un tôle perforée assurant la tenue mécanique, enroulée en cylindre et équipée d'une toile métallique dont les ouvertures sont choisies de façon adéquate afin de maintenir en place les particules d'adsorbants.

Ces grilles sont réalisées à l'horizontale à l'aide d'équipements adéquats classiquement existant dans les entreprises de chaudronnerie (perforatrices, machines à cintrer, à souder, vireurs, ponts roulants, portiques...). La toile métallique est plaquée sur les grilles et fixée à ces dernières par des systèmes adéquats (tiges, rondelles, écrous, agrafes...). Pour chacune des grilles, la face sur laquelle est appliquée la toile métallique est normalement choisie de telle sorte que l'adsorbant l'applique sur la grille lors du remplissage ou en fonctionnement normal.

La virole est fabriquée elle aussi à l'horizontale à partir de tôles métalliques, généralement en acier carbone ou parfois en acier inoxydable.

Les fonds sont également équipés de leur ouvertures et brides et préparés pour être fixés à la virole.

L'étape suivante consiste à l'enfilage puis à l'assemblage successif des différentes grilles et de la virole. Le système est rendu solidaire grâce à la base (8), au moins un fond (10,11) et le cas échéant aux pièces de raccordement (12).

Enfilage et assemblage se font classiquement « à la verticale », c'est-à-dire que les différentes grilles sont accrochées à un système de levage (grue, portique, pont roulant) par une de leur extrémité de sorte que leur axe soit vertical.

Plusieurs procédures de montage sont possibles suivant le type d'adsorbeur radial, ses dimensions, le poids respectifs des différents équipements, les vérifications à effectuer après assemblage (radiographie des soudures par exemple), les codes de construction.

Les deux principales variantes du montage à la verticale consistent à assembler les différentes grilles perforées soit sur leur base 8, soit sur un fond 10 ou 11 en utilisant si nécessaire les pièces de raccordement 12. On appellera « pièce d'assemblage » la pièce sur laquelle seront fixées en premier les grilles, que ce soit la base inférieure 8 ou un des fonds de l'adsorbeur 10, 11.

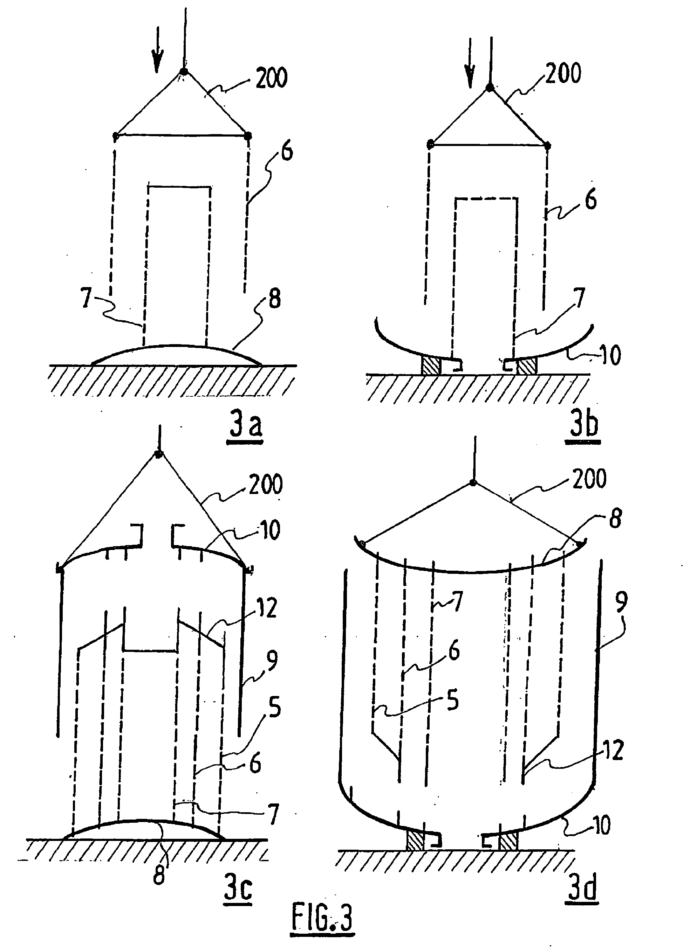

La figure 3a illustre la mise en place de la grille intermédiaire 6 alors que la grille interne 7 a déjà été fixée à la base 8. La grille intermédiaire est manoeuvrée par l'intermédiaire d'un pont roulant représenté par ses élingues 200.

La figure 3b montre de son côté la mise en place de la grille intermédiaire 6 dans le cas où l'assemblage des grilles se fait en utilisant un fond de l'adsorbeur 10. Le pont roulant, la grue ou le portique qui permet de manoeuvrer la grille est symbolisé par les élingues 200.

On conçoit qu'avec une telle procédure de montage, le positionnement concentrique des différentes grilles est relativement aisé.

La mise en place de la virole se fait habituellement en utilisant les mêmes moyens de levage.

La figure 3c montre la mise en place de la virole 9 déjà équipée de son fond supérieur 10 qui est descendue concentriquement aux 3 grilles 5,6,7 fixées sur leur base inférieure (8).

La figure 3d montre une variante dans laquelle c'est l'ensemble des grilles perforées fixées sur leur base qui est descendu dans la virole équipée de son fond supérieur 10. Des pièces de raccordement 12 permettant de fixer ensemble grilles et fond ont été représentées sur les figures 3c et 3d.

On peut imaginer de la sorte plusieurs procédures différentes d'assemblage des grilles, de la virole et d'au moins un fond. Leur point commun c'est que les différentes grilles perforées et généralement la virole sont manoeuvrées verticalement en étant fixées par une de leurs extrémités à un moyen de levage (pont roulant, grue, portique...).

La finition de l'adsorbeur et en particulier la mise en place et la fixation du dernier fond peut se faire en conservant à la verticale l'ensemble grilles- virole ou en « couchant » ce même ensemble à l'horizontale et en terminant ensuite l'assemblage.

De façon générale, la finition de l'adsorbeur (mise en place des accessoires, sablage, peinture...) se fait alors qu'il est en position horizontale, c'est-à-dire avec son grand axe parallèle au sol.

La fabrication des adsorbeurs radiaux suivant ces procédures ne posent pas dans son principe de problème particulier mais il faut que l'atelier de construction dispose ou puisse utiliser les moyens de levage 200 en conséquence, éventuellement disposer de fosses pour limiter la hauteur nécessaire.

En effet pour des grilles de 15 mètres de haut (ou de long suivant leur position par rapport au sol), il faut un pont à (ou une grue de) 40 mètres environ. Il faut en effet pouvoir passer la deuxième grille à mettre en place au dessus de la grille interne une fois que celle-ci est fixée à la base 8 ou au fond supérieur 10 ou inférieur 11. Il en est de même avec les différentes grilles et éventuellement la virole.

Chaque mètre supplémentaire de hauteur de grille nécessite une élévation du moyen de levage de deux mètres du fait de l'enfilage vertical.

Il est techniquement difficile de fabriquer des grilles en plusieurs morceaux, au minimum deux, pour ensuite les souder ou plus généralement les fixer. En effet, ces grilles doivent maintenir en place des adsorbants de faible diamètre et le moindre jeu provoquerait un écoulement des particules vers les espaces interne ou externe créant un problème majeur. Cela reste néanmoins une possibilité, en particulier dans le cas évoqué précédemment où l'adsorbeur est séparé en plusieurs volumes ( circulations centrifuge puis centripète par exemple).

La virole externe peut quant à elle, pour des problèmes de poids, être enfilée plus facilement par tronçons soudés les uns aux autres.

En variante, le système formé par les grilles perforées et le fond supérieur peut être mis à l'horizontale après sa fabrication à la verticale et la virole enfilée à l'horizontale.

Des écarteurs, des pièces de centrage, des supports... peuvent être mis en place de façon temporaire ou définitive pour faciliter la manutention.

Les descriptions données d'un enfilage à la verticale des grilles perforées n'est qu'un exemple correspondant à un modèle particulier d'adsorbeur radial. Le principe général est que le mouvement de mise en place des grilles perforées se fait de haut en bas parallèlement à l'action de la gravité. Manoeuvrées de la sorte, les grilles ne subissent pas (ou peu) de déformation

La hauteur nécessaire des ateliers pour enfiler les grilles concentriquement les unes aux autres limite le nombre de ceux qui peuvent assurer la construction des adsorbeurs de grande taille.

L'atelier ayant les capacités suffisantes peut être relativement éloigné du site ou les adsorbeurs doivent être implantés. Le transport de l'atelier au site peut lui-même être problématique. Globalement l'éloignement des ateliers, le manque de concurrence entraîne des coûts trop importants pour ces adsorbeurs radiaux.

Il est également possible d'assurer la fabrication finale de l'adsorbeur sur site, les différentes grilles et la virole ayant été fabriquées en atelier. Cela conduit à immobiliser un ou des moyens de levage exceptionnels (grues) pendant une période assez longue et à être tributaire des conditions atmosphériques. On conçoit que ce type d'assemblage final à la verticale sur site n'est pas généralisable et qu'il peut être très coûteux.

Partant de là, un problème qui se pose est de fournir un procédé d'assemblage amélioré des adsorbeurs radiaux, procédé qui serait en particulier applicable à des grilles de grande dimension, par exemple de hauteur supérieure à 10 m.

Dans l'exposé de l'invention qui suit, les différents éléments d'un adsorbeur radial sont référencés selon les références de la figure 2.

Une solution de l'invention est un procédé d'assemblage d'au moins un adsorbeur radial comprenant au moins deux grilles perforées concentriques, un fond supérieur 10, un fond inférieur 11, une pièce d'assemblage, qui est une base inférieure 8 ou le fond inférieur 11 dudit adsorbeur, et une virole 9 cylindrique de même axe que lesdites grilles, caractérisé en ce que lesdites grilles perforées sont assemblées concentriquement à l'horizontale.

Par « horizontal », on entend de façon parallèle au sol.

L'assemblage mis en oeuvre dans le procédé selon l'invention comprend un dispositif D constitué d'un support 100 et d'au moins un socle 101 solidaire au support 100, et au moins un moyen de levage 201, caractérisé en ce que :
- le socle 101 est tel que l'on peut fixer sur ledit socle une pièce d'assemblage d'un adsorbeur radial,
- le moyen de levage est apte à positionner les grilles de l'adsorbeur radial, en position horizontale, contre la pièce d'assemblage, fixée sur le socle 101 de manière à faciliter le soudage à l'horizontale de la grille à la base, et en ce que
- le support 100 est apte à maintenir en porte à faux la grille à l'horizontale lorsque la grille est soudée à ladite base inférieure.

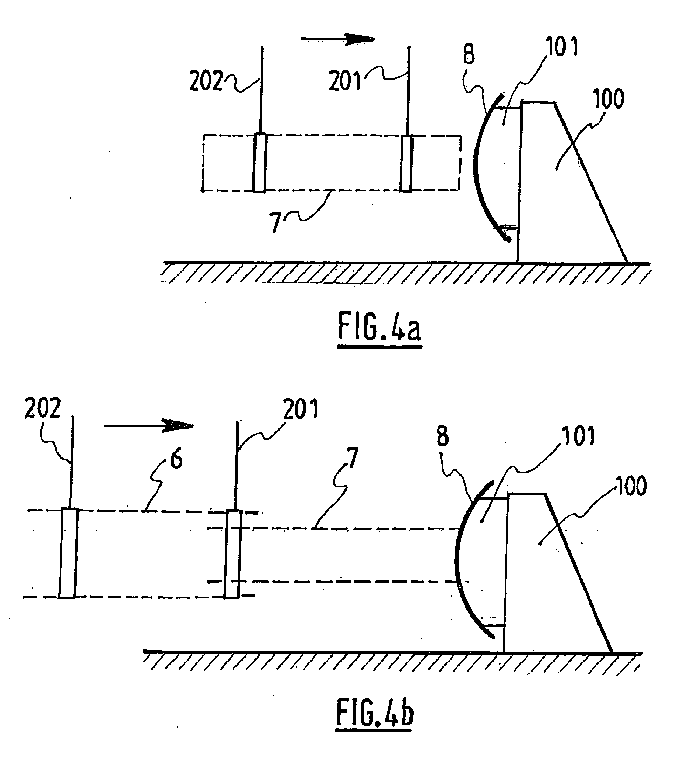

Cet assemblage est représenté sur les figures 4a et 4b.

De préférence, le socle 101 solidaire au support 100 tourne autour de son axe central.

De préférence encore, ledit dispositif D comprend deux socles 101 disposées de part et d'autre du support 100.

Le moyen de levage 201 est préférentiellement un pont roulant.

La pièce d'assemblage est une base inférieure 8, un fond inférieur 11 ou un fond supérieur 10 de l'adsorbeur radial. On peut également envisager d'avoir pour pièce d'assemblage un fond supérieur 10 auquel seront fixées les grilles perforées de l'adsorbeur radial.

Le support 100 est de forme et de masse telle qu'il puisse supporter les charges qui lui sont fixées. Le support peut être lui-même fixé au sol par des moyens adéquats.

On utilisera le terme de « socle » pour définir la plaque, éventuellement en forme de disque, et plus généralement le système sur lequel est fixée la pièce d'assemblage.

Cette pièce d'assemblage comme déjà indiqué sera en général soit la base support des grilles, soit le fond inférieur 11 de l'adsorbeur.

On notera que le support (100) et le socle (101) peuvent être une même pièce assurant les deux fonctions, d'une part « fixation » à la pièce d'assemblage, d'autre part de « maintien » dudit adsorbeur en position horizontale.

L'assemblage mis en oeuvre dans le procédé selon l'invention peut comprendre, de préférence, lorsqu'il est utilisé pour des grilles de hauteur supérieure à environ 10 à 15 m :
- un support mobile 50 apte à soutenir une grille d'un adsorbeur radial supportée à une extrémité par le dispositif D ; et
- un moyen mécanique 60 apte à s'introduire dans l'espace interne d'une grille d'un adsorbeur radial en position horizontale et à soutenir celle-ci.

Lorsque l'adsorbeur radial présente comme pièce d'assemblage une base inférieure 8, le procédé d'assemblage selon l'invention, dans lequel on utilise un assemblage selon l'invention, comprend de préférence les étapes suivantes :
a) les grilles de l'adsorbeur radial sont positionnées concentriquement au moyen du moyen de levage 201 en position horizontale contre la base inférieure 8 et soudées à l'horizontale à ladite base pour former un ensemble soudé « base inférieure - grilles » maintenu en porte à faux à l'horizontale par le dispositif D ; et
b1) une virole externe 9 est positionnée autour des grilles soudées à l'étape a), puis les fonds inférieur 11 et supérieur 10 sont soudés à la virole 9; ou
b2) une virole externe 9, à laquelle on a préalablement soudé le fond supérieur 10, est positionnée autour des grilles soudées à l'étape a), puis le fond inférieur 11 est soudé à la virole.

Lorsque l'adsorbeur radial présente comme pièce d'assemblage le fond inférieur 11, le procédé d'assemblage selon l'invention, dans lequel on utilise un assemblage selon l'invention, comprend de préférence les étapes suivantes :
a) les grilles de l'adsorbeur radial sont positionnées concentriquement au moyen du moyen de levage 201 en position horizontale contre le fond inférieur 11 et soudées à l'horizontale audit fond pour former un ensemble soudé « fond inférieur 11- grilles » maintenu en porte à faux à l'horizontale par le dispositif D ; et
b1) une virole externe 9 est positionnée autour des grilles soudées à l'étape a), puis le fond supérieur 10 est soudé à la virole 9; ou
b2) une virole externe 9, à laquelle on a préalablement soudé le fond supérieur 10, est positionnée autour des grilles soudées à l'étape a).

Lorsque l'adsorbeur radial présente comme pièce d'assemblage un fond supérieur 10, le procédé d'assemblage selon l'invention, dans lequel on utilise un assemblage selon l'invention, comprend de préférence les étapes suivantes :
a) les grilles de l'adsorbeur radial sont positionnées concentriquement au moyen du moyen de levage 201 en position horizontale contre le fond supérieur 10 et soudées à l'horizontale audit fond pour former un ensemble soudé « fond supérieur 10 - grilles » maintenu en porte à faux à l'horizontale par le dispositif D ; et
b1) une virole externe 9 est positionnée autour des grilles soudées à l'étape a), puis le fond inférieur 11 est soudé à la virole 9; ou
b2) une virole externe 9, à laquelle on a préalablement soudé le fond inférieur 11, est positionnée autour des grilles soudées à l'étape a).

De préférence, lorsque l'adsorbeur radial présente comme pièce d'assemblage un fond supérieur 10, les grilles sont fixées à une base inférieure 8 entre les étapes a) et b1) ou b2).

Dans ces trois procédés, on entend par l'expression « une virole est positionnée » soit que l'on enfile la virole autour des grilles, soit que l'on introduit les grilles à l'intérieur de la virole.

Les trois procédés ci-dessus peuvent comprendre une ou plusieurs des caractéristiques suivantes :
- on met en oeuvre un dispositif D comprenant deux socles 101 disposées de part et d'autre du support 100 et en ce que deux adsorbeurs radiaux sont construits en parallèle ;
- à l'étape a) on enfile et on soude successivement de manière concentrique les grilles de l'adsorbeur à la pièce d'assemblage en commençant par la grille de diamètre le plus petit.

Les figures 4a et 4b illustrent le procédé d'assemblage, en prenant comme exemple le procédé dans lequel la pièce d'assemblage est la base inférieure 8. La Figure 4a montre le positionnement de la première grille 7 (grille interne) au moyen de deux ponts roulants 201 et 202. Une fois fixée à la base inférieure 8, la première grille 7 est maintenue en équilibre comme le montre la figure 4b. En effet, le support 100 a une masse suffisante ou est suffisamment arrimé au sol pour maintenir la grille en équilibre sans aucun appui ou aide extérieur.

La figure 4b montre également comment est enfilée la seconde grille 6 concentriquement à la première.

La rotation du socle entraînant la rotation de la base et de la grille permet d'effectuer la soudure de façon optimale, c'est-à-dire sans avoir à déplacer l'appareil de soudage autour de la grille (ou de la virole).

On procède de la sorte avec les différentes grilles.

Le support doit être capable de maintenir en porte à faux la totalité des grilles perforées. Suivant la taille de l'adsorbeur, cela représente des dizaines à des centaines de tonnes. Cet équilibre peut si nécessaire être obtenu en créant un effet levier du côté opposé à l'adsorbeur. Il peut s'agir de contre-poids ou de fixation dans le sol.

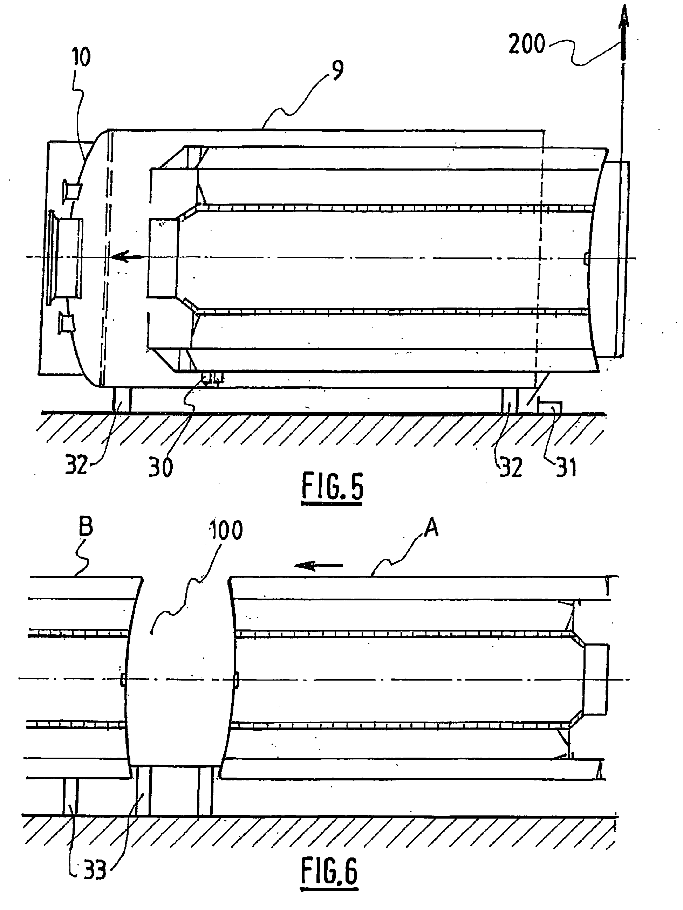

L'ensemble des grilles et la base inférieure 8 sont alors introduits dans la virole externe 9 à laquelle aura été préalablement soudé le fond 10. Pour ce faire, comme représenté sur la figure 5 on pourra utiliser conjointement pont roulant 200 et chariot support mobile 30 commandé par une boîte de commande 31. La virole étant lisse, le chariot 30 peut se déplacer horizontalement sans problème. La virole elle-même est supportée par des berceaux vireurs 32. Après fixation des grilles à la virole et calage, il est alors possible de faire tourner l'ensemble. Cela facilite les opérations finales.

Une procédure de montage peut permettre d'équilibrer les masses enjeu et de limiter le porte à faux tel qu'on peut le voir sur la Figure 6. Deux adsorbeurs A et B, fixés tête-bêche sur un support commun 40 sont construits en parallèle, c'est-à-dire que l'on fixe la grille interne de l'adsorbeur B par exemple, puis la grille interne de l'adsorbeur A. Le système est alors naturellement en équilibre. On continue de la sorte avec les deux grilles identiques suivante fixée d'un côté puis de l'autre. Et ainsi de suite. De la sorte, le porte à faux n'est toujours que d'une grille. Avec un support central de caractéristique donné (masse, surface au sol, fixation au sol..), on peut alors construire des adsorbeurs beaucoup plus gros. Le principe de réalisation est représenté sur la figure 6. La troisième grille de l'adsorbeur A est approchée du support commun pour y être ensuite soudée alors que cette grille a déjà été mise en place côté adsorbeur B.

Il est apparu que ces systèmes d'enfilage à l'horizontale présentaient malgré tout eux aussi des limitations lorsque la taille des adsorbeurs devient encore plus importante.

Cette limitation apparaît plus précisément, quand la hauteur des grilles perforées dépasse une certaine valeur, généralement de 10 à 15 m suivant les caractéristiques desdites grilles (diamètre, taux de perforation....) dans le cas des adsorbeurs radiaux destinés aux épurations d'air. En effet, du fait de leur perforation, les grilles perforées ont une « inertie » plus faible qu'un cylindre non perforée, ce qui provoque une déviation vers le sol (flèche) relativement importante de l'extrémité libre des grilles lorsqu'elles sont fixées horizontalement à leur support.

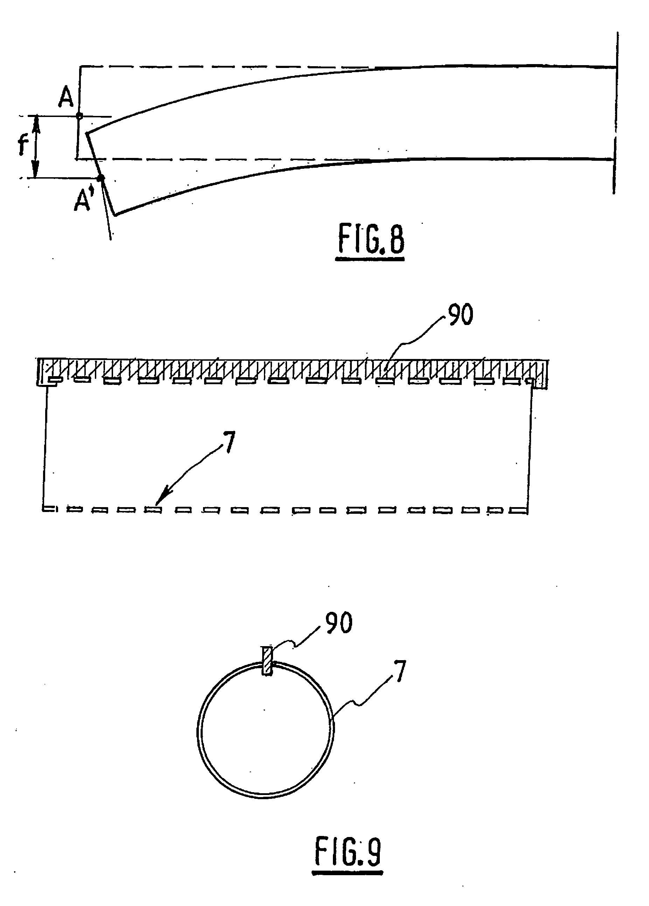

La Figure 8 illustre ce point et définit la flèche (f) telle que utilisée dans la suite du texte. La flèche est la distance verticale entre d'une part le centre de l'extrémité libre d'une grille, supposée parallèle au sol sur toute sa longueur (c'est-à-dire ne subissant aucune déformation), et d'autre part le centre de l'extrémité libre de cette même grille subissant une déviation sous l'effet de son poids.

Par extrémité libre, on entend l'extrémité de la grille qui n'est pas fixée à la base inférieure 8 (ou plus généralement à la pièce d'assemblage) et donc qui n'est pas soutenue directement par le support 100.

L'extrémité libre de la grille restant essentiellement circulaire, on retrouve une déviation du même ordre de grandeur en prenant comme repère le point limite de la génératrice inférieure (A et A' sur la Figure 8).

La flèche (f) est d'autant plus importante que la grille est longue. Elle varie en première approximation comme la longueur à la puissance 4.

On appellera par la suite « flèche naturelle », la flèche d'une grille fixée sur sa pièce d'assemblage en l'absence de tout système de maintien.

Cette déformation supprime la symétrie autour de l'axe horizontal et peut rapidement empêcher l'enfilage de la grille suivante. En effet, pour limiter les pertes de charge à travers l'adsorbeur, les épaisseurs retenues pour les lits d'adsorbant sont faibles, ce qui fait que les grilles successives ont des diamètres relativement proches. Géométriquement, on voit que la flèche de la grille interne doit être inférieure à la différence entre les rayons des deux grilles.

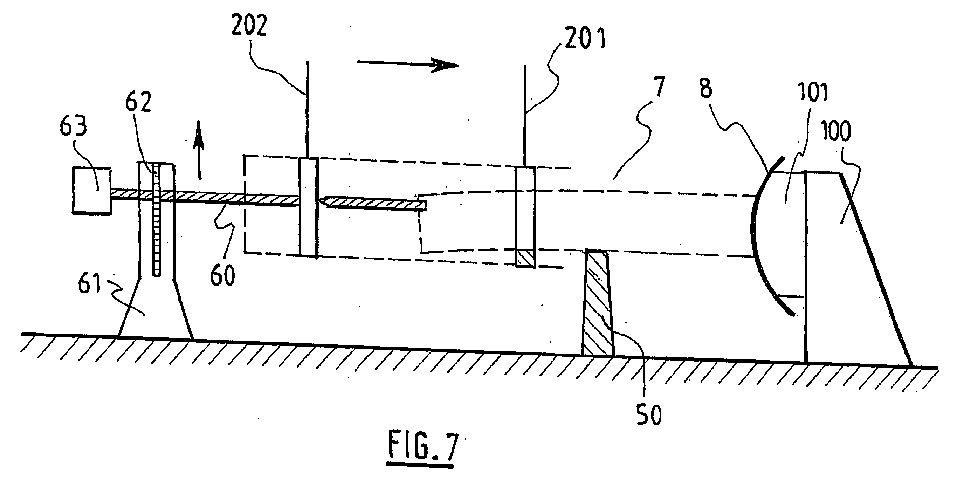

Dans le procédé qui suit, il est fait référence aux éléments d'un adsorbeur radial représenté figure 2 et aux éléments d'un dispositif représenté figure 7

Une solution de l'invention est un procédé d'assemblage d'au moins un adsorbeur radial comprenant au moins deux grilles perforées concentriques, un fond supérieur 10, un fond inférieur 11, une base inférieure 8 comme pièce d'assemblage, et une virole 9 cylindrique de même axe que lesdites grilles, dans lequel on utilise un dispositif selon l'invention présentant un support mobile 50 et un moyen mécanique 60, et comprenant les étapes suivantes :
a) la grille de diamètre plus petit de l'adsorbeur radial est positionnée au moyen du moyen de levage 201 en position horizontale contre la base inférieure 8 et soudée à l'horizontale à ladite base, pour former un ensemble soudé « base inférieure 8- grilles » maintenu en porte à faux à l'horizontale par le dispositif D,
b) la grille de diamètre plus petit soudée à l'étape a) est maintenue à sa mi-longueur par un support mobile 50 et la grille de diamètre supérieur est enfilée à l'horizontale, sur une longueur L non nulle, autour de la grille interne,
c) le moyen mécanique 60 est introduit au moins en partie dans l'espace interne de la grille de diamètre plus petit de façon à maintenir celle-ci dans la position dont elle bénéficie lorsqu'elle est soutenue par le support mobile et on retire ledit support mobile,
d) la grille de diamètre supérieur est enfilée à l'horizontale jusqu'à la base inférieure 8 et soudée à celle-ci ;
e) les grilles restantes de l'adsorbeur radial sont assemblées concentriquement autour de la grille de diamètre supérieur; et
f1) une virole externe 9 est positionnée autour des grilles soudées, puis les fonds inférieur 11 et supérieur 10 sont soudés à la virole 9; ou
f2) une virole externe 9, à laquelle on a préalablement soudé le fond supérieur 10, est positionnée autour des grilles soudées, puis le fond inférieur 11 est soudé à la virole.

De préférence, à l'étape e) pour assembler concentriquement les grilles restantes on réitère les étapes a) à d) avec les grilles restantes de l'adsorbeur radial en considérant à chaque fois que la grille de diamètre plus petit est la dernière grille soudée à la base inférieure 8.

Une variante de ce procédé est un procédé d'assemblage d'au moins un adsorbeur radial comprenant au moins deux grilles perforées concentriques, un fond supérieur 10, un fond inférieur 11 comme pièce d'assemblage, et une virole 9 cylindrique de même axe que lesdites grilles, dans lequel on utilise un dispositif on utilise un dispositif selon l'invention présentant un support mobile 50 et un moyen mécanique 60, et comprenant les étapes suivantes :
a) la grille de diamètre plus petit de l'adsorbeur radial est positionnée au moyen du moyen de levage 201 en position horizontale contre le fond inférieur 11 et soudée à l'horizontale à ledit fond, pour former un ensemble soudé « fond inférieur 11 - grilles » maintenu en porte à faux à l'horizontale par le dispositif D,
b) la grille de diamètre plus petit soudée à l'étape a) est maintenue à sa mi-longueur par un support mobile 50 et la grille de diamètre supérieur est enfilée à l'horizontale, sur une longueur L non nulle, autour de la grille interne,
c) le moyen mécanique 60 est introduit au moins en partie dans l'espace interne de la grille de diamètre plus petit de façon à maintenir celle-ci dans la position dont elle bénéficie lorsqu'elle est soutenue par le support mobile et on retire ledit support mobile,
d) la grille de diamètre supérieur est enfilée à l'horizontale jusqu'au fond inférieur 11 et soudée à celle-ci ;
e) les grilles restantes de l'adsorbeur radial sont assemblées concentriquement autour de la grille de diamètre supérieur; et
f1) une virole externe 9 est positionnée autour des grilles soudées, puis le fond supérieur 10 est soudé à la virole 9; ou
f2) une virole externe 9, à laquelle on a préalablement soudé le fond supérieur 10, est positionnée autour des grilles soudées.

De préférence, à l'étape e) pour assembler concentriquement les grilles restantes on réitère les étapes a) à d) avec les grilles restantes de l'adsorbeur radial en considérant à chaque fois que la grille de diamètre plus petit est la dernière grille soudée au fond inférieur 11.

Une autre variante de ce procédé est un procédé d'assemblage d'au moins un adsorbeur radial comprenant au moins deux grilles perforées concentriques, un fond inférieur (11), un fond supérieur (10) comme pièce d'assemblage, et une virole 9 cylindrique de même axe que lesdites grilles, dans lequel on utilise un dispositif on utilise un dispositif selon l'invention présentant un support mobile 50 et un moyen mécanique 60, et comprenant les étapes suivantes :
a) la grille de diamètre plus petit de l'adsorbeur radial est positionnée au moyen du moyen de levage 201 en position horizontale contre le fond supérieur 10 et soudée à l'horizontale à ledit fond, pour former un ensemble soudé « fond supérieur 10 - grilles » maintenu en porte à faux à l'horizontale par le dispositif D,
b) la grille de diamètre plus petit soudée à l'étape a) est maintenue à sa mi-longueur par un support mobile 50 et la grille de diamètre supérieur est enfilée à l'horizontale, sur une longueur L non nulle, autour de la grille interne,
c) le moyen mécanique 60 est introduit au moins en partie dans l'espace interne de la grille de diamètre plus petit de façon à maintenir celle-ci dans la position dont elle bénéficie lorsqu'elle est soutenue par le support mobile et on retire ledit support mobile,
d) la grille de diamètre supérieur est enfilée à l'horizontale jusqu'au fond supérieur 10 et soudée à celle-ci ;
e) les grilles restantes de l'adsorbeur radial sont assemblées concentriquement autour de la grille de diamètre supérieur; et
f1) une virole externe 9 est positionnée autour des grilles soudées, puis le fond inférieur 11 est soudé à la virole 9; ou
f2) une virole externe 9, à laquelle on a préalablement soudé le fond inférieur 11, est positionnée autour des grilles soudées.

De préférence, à l'étape e) pour assembler concentriquement les grilles restantes on réitère les étapes a) à d) avec les grilles restantes de l'adsorbeur radial en considérant à chaque fois que la grille de diamètre plus petit est la dernière grille soudée au fond supérieur 10.

De préférence, lorsque l'adsorbeur radial présente comme pièce d'assemblage un fond supérieur 10, les grilles sont fixées à une base inférieure 8 entre les étapes e) et f1) ou f2).

Ce procédé permet de construire à l'horizontale des adsorbeurs radiaux comprenant des grilles perforées de hauteur allant jusqu'à environ 12 à 25m (selon les caractéristiques des dites grilles : diamètre, taux et type de perforations..)

Les bases inférieures sur lesquelles peuvent être fixées les grilles ont généralement des diamètres allant de 2 à 6 mètres. Il en est approximativement de même des fonds de l'adsorbeur (2 à 7 mètres). Ces dimensions sont souvent fixées par les contraintes de transport. Au point de vue assemblage, rien n'empêche d'avoir des diamètres plus importants à partir du moment où les outillages (pont roulant, dispositif D) sont prévus pour.

La description donnée ci-dessus définit les principes de l'assemblage qui font l'objet de l'invention. Des variantes sont possibles sans changer pour autant les caractéristiques de l'assemblage à l'horizontale. A titre d'exemple, le support mobile qui est utilisé dans le cas de grille de grande longueur et/ou très flexible peut être placé non pas au milieu de cette dernière mais par exemple plus près de l'extrémité supportée de sorte de permettre juste l'enfilage de la grille de diamètre supérieur. La mise en place du moyen mécanique 60 en sera alors simplifié (distance plus courte à la grille à supporter).

Selon le cas, le procédé, selon l'invention, de construction d'au moins un adsorbeur radial comprenant des grilles perforées concentriques peut présenter au moins l'une des caractéristiques suivantes :
- un raidisseur 90 est fixé à au moins une grille pendant au moins une partie de la construction de manière à limiter la flexibilité de la grille,
- tout au long de l'enfilage des grilles, la flèche de chacune des dites grilles est inférieure à 20 cm, de préférence inférieure à 10 cm.

La Figure 7 illustre le procédé d'assemblage d'au moins un adsorbeur radial comprenant des grilles de hauteur supérieure à 12 m et posant un problème d'enfilage à cause de la flèche naturelle en résultant , en prenant comme exemple le procédé dans lequel la pièce d'assemblage est la base inférieure 8. Dans un premier temps, la grille intérieure 7 après avoir été fixé à la base inférieure 8 est maintenue à environ sa mi-longueur par un support mobile 50. Du fait du support, la flèche f à l'extrémité libre est bien plus faible que la flèche qu'il y aurait sans support. Cette flèche peut être réduite à titre d'exemple à une valeur d'une dizaine de centimètres -ou moins- alors que sans support, elle pourrait atteindre et dépasser un mètre. Dans un deuxième temps, la grille suivante 6 est enfilée autour de la première grille grâce aux moyens de levage mobiles 201, 202 (pont roulant de préférence) et ceci jusqu'à ce que l'extrémité de la grille à fixer au support commun soit proche du support de la grille intérieure. Pendant que les grilles sont dans cette position, un « bras » 60 est enfilé dans l'extrémité libre (opposée au socle 100 et à la base inférieure 8) de la grille que l'on cherche à enfiler. Ce bras est manoeuvré de façon à venir en contact avec l'extrémité libre de la grille interne. Ce bras est solidaire de son support 61 par l'intermédiaire d'une crémaillère 62. Un contre-poids 63 permet si nécessaire d'équilibrer l'effort à fournir à l'extrémité du bras pour maintenir en place, voire redressé, la grille intérieure 7. La Figure 7 illustre le moment où le bras maintient la grille interne et où il est alors possible d'enlever le support mobile 50 sans risque que la grille interne vienne du fait de sa flèche naturelle s'appuyer sur la grille extérieure empêchant de la sorte de continuer la mise en place des dites grilles.

La grille de plus grand diamètre étant enfilée, il est alors possible de mettre en place des supports pour maintenir la concentricité des deux grilles.

Si nécessaire, on continue de la sorte avec la ou les grilles suivantes.

Le système formé des grilles et de la base inférieure 8 étant réalisé, l'enfilage de la virole peut alors s'effectuer suivant une des procédures déjà décrites.

Dans cette première variante, on permet une construction à l'horizontale en maintenant au moins une des grilles par un appui (support, bras).

Un « système de raidisseur » peut être installé temporairement pendant la construction sur une -ou plusieurs grilles- et qui limite alors la flèche. Dans le principe, il s'agit d'un outillage fixé à l'intérieur ou à l'extérieur de la grille, longitudinalement, suivant une ou plusieurs génératrices. Ce dispositif vient rigidifier la grille en limitant la flexibilité provoqué en partie par les perforations : elle bloque la géométrie cylindrique de base en limitant allongement et/ ou compression.

Un tel système est représenté schématiquement sur la figure 9. Le raidisseur 90 est fixé sur une génératrice de la grille 7. De façon préférentielle, il sera installé sur la face de la grille sur laquelle il n'y a pas de toile métallique, afin de ne pas risquer d'endommager cette dernière. Il consiste en une pièce rigide approximativement de la longueur de la grille à soutenir et rendu solidaire de cette dernière par un système de fixation adéquat.

Ces raidisseurs pourront être démontés après mise en place de support pour maintenir la concentricité des grilles. Ils peuvent éventuellement être laissés en place pour augmenter la rigidité des grilles durant le fonctionnement de l'adsorbeur.

Enfin, la présente invention à également pour objet :
- un adsorbeur radial construit suivant un procédé selon l'invention. Cet adsorbeur présente de préférence un diamètre de virole de 2 à 7 m, de préférence de 3 à 6 m et/ou une hauteur de grille de 3 à 25 m, de préférence de 5 à 20 m ;
- un procédé de séparation ou de purification d'un gaz mettant en oeuvre un adsorbeur selon l'invention. Ce procédé peut être procédé d'épuration d'air en au moins une des impuretés H₂O, CO₂, NOx, hydrocarbures..., un procédé de production d'oxygène par adsorption, un procédé de déballastage en CO₂ de gaz divers.

## Revendications

1. Procédé d'assemblage d'au moins un adsorbeur radial comprenant au moins deux grilles perforées concentriques, un fond supérieur (10), un fond inférieur (11), et une virole (9) cylindrique de même axe que lesdites grilles, **caractérisé en ce que** lesdites grilles perforées sont assemblées concentriquement à l'horizontale.

2. Procédé d'assemblage, selon la revendication 1, d'au moins un adsorbeur radial comprenant comme pièce d'assemblage une base inférieure (8), dans lequel on utilise un assemblage comprenant un dispositif D constitué d'un support (100) et d'au moins un socle (101) solidaire au support (100), et au moins un moyen de levage (201), dans lequel
- le socle (101) est tel que l'on peut fixer sur ledit socle une pièce d'assemblage d'un adsorbeur radial,
- le moyen de levage est apte à positionner les grilles de l'adsorbeur radial, en position horizontale, contre la pièce d'assemblage, fixée sur le socle (101) de manière à faciliter le soudage à l'horizontale de la grille à la base, et
- le support (100) est apte à maintenir en porte à faux la grille à l'horizontale lorsque la grille est soudée à ladite base inférieure, comprenant les étapes suivantes :
a) Les grilles de l'adsorbeur radial sont positionnées concentriquement au moyen du moyen de levage (201) en position horizontale contre la base inférieure (8) et soudées à l'horizontale à ladite base pour former un ensemble soudé « base inférieure - grilles » maintenu en porte à faux à l'horizontale par le dispositif D ; et
b1) Une virole externe (9) est positionnée autour des grilles soudées à l'étape a), puis les fonds inférieur (11) et supérieur (10) sont soudés à la virole (9); ou
b2) une virole externe (9), à laquelle on a préalablement soudé le fond supérieur (10), est positionnée autour des grilles soudées à l'étape a), puis le fond inférieur (11) est soudé à la virole.

3. Procédé d'assemblage, selon la revendication 1, d'au moins un adsorbeur radial comprenant comme pièce d'assemblage le fond inférieur (11), dans lequel on utilise un assemblage comprenant un dispositif D constitué d'un support (100) et d'au moins un socle (101) solidaire au support (100), et au moins un moyen de levage (201), dans lequel
- le socle (101) est tel que l'on peut fixer sur ledit socle une pièce d'assemblage d'un adsorbeur radial,
- le moyen de levage est apte à positionner les grilles de l'adsorbeur radial, en position horizontale, contre la pièce d'assemblage, fixée sur le socle (101) de manière à faciliter le soudage à l'horizontale de la grille à la base, et
- le support (100) est apte à maintenir en porte à faux la grille à l'horizontale lorsque la grille est soudée à ladite base inférieure, comprenant les étapes suivantes :
a) Les grilles de l'adsorbeur radial sont positionnées concentriquement au moyen du moyen de levage (201) en position horizontale contre le fond inférieur (11) et soudées à l'horizontale audit fond pour former un ensemble soudé « fond inférieur (11)- grilles » maintenu en porte à faux à l'horizontale par le dispositif D ; et
b1) Une virole externe (9) est positionnée autour des grilles soudées à l'étape a), puis le fond supérieur (10) est soudé à la virole (9); ou
b2) Une virole externe (9), à laquelle on a préalablement soudé le fond supérieur (10), est positionnée autour des grilles soudées à l'étape a).

4. Procédé d'assemblage, selon la revendication 1, d'au moins un adsorbeur radial comprenant comme pièce d'assemblage le fond supérieur (10), dans lequel on utilise un assemblage comprenant un dispositif D constitué d'un support (100) et d'au moins un socle (101) solidaire au support (100), et au moins un moyen de levage (201), dans lequel
- le socle (101) est tel que l'on peut fixer sur ledit socle une pièce d'assemblage d'un adsorbeur radial,
- le moyen de levage est apte à positionner les grilles de l'adsorbeur radial, en position horizontale, contre la pièce d'assemblage, fixée sur le socle (101) de manière à faciliter le soudage à l'horizontale de la grille à la base, et
- le support (100) est apte à maintenir en porte à faux la grille à l'horizontale lorsque la grille est soudée à ladite base inférieure, comprenant les étapes suivantes :
a) Les grilles de l'adsorbeur radial sont positionnées concentriquement au moyen du moyen de levage (201) en position horizontale contre le fond supérieur (10) et soudées à l'horizontale audit fond pour former un ensemble soudé « fond supérieur (10)- grilles » maintenu en porte à faux à l'horizontale par le dispositif D ; et
b1) Une virole externe (9) est positionnée autour des grilles soudées à l'étape a), puis le fond inférieur (11) est soudé à la virole (9); ou
b2) Une virole externe (9), à laquelle on a préalablement soudé le fond inférieur (11), est positionnée autour des grilles soudées à l'étape a).

5. Procédé selon la revendication 4, **caractérisé en ce qu'**entre les étapes a) et b1) ou b2) les grilles sont fixées à une base inférieure (8).

6. Procédé d'assemblage selon la revendication 1 d'au moins un adsorbeur radial comprenant une base inférieure (8) comme pièce d'assemblage, dans lequel on utilise un assemblage comprenant un dispositif D constitué d'un support (100) et d'au moins un socle (101) solidaire au support (100), et au moins un moyen de levage (201), un support mobile (50) et un moyen mécanique (60), dans lequel
- le socle (101) est tel que l'on peut fixer sur ledit socle une pièce d'assemblage d'un adsorbeur radial,
- le moyen de levage est apte à positionner les grilles de l'adsorbeur radial, en position horizontale, contre la pièce d'assemblage, fixée sur le socle (101) de manière à faciliter le soudage à l'horizontale de la grille à la base, et
- le support (100) est apte à maintenir en porte à faux la grille à l'horizontale lorsque la grille est soudée à ladite base inférieure,
- le support mobile (50) est apte à soutenir une grille d'un adsorbeur radial supportée à une extrémité par le dispositif D et d'une hauteur supérieure à 10 m ;
- et le moyen mécanique (60) est apte à s'introduire dans l'espace interne d'une grille d'un adsorbeur radial en position horizontale et à soutenir celle-ci, comprenant les étapes suivantes :
a) La grille de diamètre plus petit de l'adsorbeur radial est positionnée au moyen du moyen de levage (201) en position horizontale contre la base inférieure (8) et soudée à l'horizontale à ladite base, pour former un ensemble soudé « base inférieure (8)- grilles » maintenu en porte à faux à l'horizontale par le dispositif D,
b) La grille de diamètre plus petit soudée à l'étape a) est maintenue à sa mi-longueur par un support mobile (50) et la grille de diamètre supérieur est enfilée à l'horizontale, sur une longueur L non nulle, autour de la grille interne,
c) Le moyen mécanique (60) est introduit au moins en partie dans l'espace interne de la grille de diamètre plus petit de façon à maintenir celle-ci dans la position dont elle bénéficie lorsqu'elle est soutenue par le support mobile et on retire ledit support mobile,
d) La grille de diamètre supérieur est enfilée à l'horizontale jusqu'à la base inférieure (8) et soudée à celle-ci ;
e) Les grilles restantes de l'adsorbeur radial sont assemblées concentriquement autour de la grille de diamètre supérieur; et
f1) Une virole externe (9) est positionnée autour des grilles soudées, puis les fonds inférieur (11) et supérieur (10) sont soudés à la virole (9); ou
f2) Une virole externe (9), à laquelle on a préalablement soudé le fond supérieur (10), est positionnée autour des grilles soudées, puis le fond inférieur (11) est soudé à la virole.

7. Procédé d'assemblage selon la revendication 1 d'au moins un adsorbeur radial comprenant un fond inférieur (11) comme pièce d'assemblage, dans lequel on utilise un assemblage comprenant un dispositif D constitué d'un support (100) et d'au moins un socle (101) solidaire au support (100), et au moins un moyen de levage (201), un support mobile (50) et un moyen mécanique (60), dans lequel
- le socle (101) est tel que l'on peut fixer sur ledit socle une pièce d'assemblage d'un adsorbeur radial,
- le moyen de levage est apte à positionner les grilles de l'adsorbeur radial, en position horizontale, contre la pièce d'assemblage, fixée sur le socle (101) de manière à faciliter le soudage à l'horizontale de la grille à la base, et
- le support (100) est apte à maintenir en porte à faux la grille à l'horizontale lorsque la grille est soudée à ladite base inférieure,
- le support mobile (50) est apte à soutenir une grille d'un adsorbeur radial supportée à une extrémité par le dispositif D et d'une hauteur supérieure à 10 m ;
- et le moyen mécanique (60) est apte à s'introduire dans l'espace interne d'une grille d'un adsorbeur radial en position horizontale et à soutenir celle-ci, comprenant les étapes suivantes :
a) La grille de diamètre plus petit de l'adsorbeur radial est positionnée au moyen du moyen de levage (201) en position horizontale contre le fond inférieur (11) et soudée à l'horizontale à ledit fond, pour former un ensemble soudé « fond inférieur (11) - grilles » maintenu en porte à faux à l'horizontale par le dispositif D,
b) La grille de diamètre plus petit soudée à l'étape a) est maintenue à sa mi-longueur par un support mobile (50) et la grille de diamètre supérieur est enfilée à l'horizontale, sur une longueur L non nulle, autour de la grille interne,
c) Le moyen mécanique (60) est introduit au moins en partie dans l'espace interne de la grille de diamètre plus petit de façon à maintenir celle-ci dans la position dont elle bénéficie lorsqu'elle est soutenue par le support mobile et on retire ledit support mobile,
d) La grille de diamètre supérieur est enfilée à l'horizontale jusqu'au fond inférieur (11) et soudée à celle-ci ;
e) Les grilles restantes de l'adsorbeur radial sont assemblées concentriquement autour de la grille de diamètre supérieur; et
f1) Une virole externe (9) est positionnée autour des grilles soudées, puis le fond supérieur (10) est soudé à la virole (9); ou
f2) Une virole externe (9), à laquelle on a préalablement soudé le fond supérieur (10), est positionnée autour des grilles soudées.

8. Procédé d'assemblage selon la revendication 1 d'au moins un adsorbeur radial comprenant un fond supérieur (10) comme pièce d'assemblage, dans lequel on utilise un assemblage comprenant un dispositif D constitué d'un support (100) et d'au moins un socle (101) solidaire au support (100), et au moins un moyen de levage (201), un support mobile (50) et un moyen mécanique (60), dans lequel
- le socle (101) est tel que l'on peut fixer sur ledit socle une pièce d'assemblage d'un adsorbeur radial,
- le moyen de levage est apte à positionner les grilles de l'adsorbeur radial, en position horizontale, contre la pièce d'assemblage, fixée sur le socle (101) de manière à faciliter le soudage à l'horizontale de la grille à la base, et
- le support (100) est apte à maintenir en porte à faux la grille à l'horizontale lorsque la grille est soudée à ladite base inférieure,
- le support mobile (50) est apte à soutenir une grille d'un adsorbeur radial supportée à une extrémité par le dispositif D et d'une hauteur supérieure à 10 m ;
- et le moyen mécanique (60) est apte à s'introduire dans l'espace interne d'une grille d'un adsorbeur radial en position horizontale et à soutenir celle-ci,, et comprenant les étapes suivantes :
a) La grille de diamètre plus petit de l'adsorbeur radial est positionnée au moyen du moyen de levage (201) en position horizontale contre le fond supérieur (10) et soudée à l'horizontale à ledit fond, pour former un ensemble soudé « fond supérieur (10) - grilles » maintenu en porte à faux à l'horizontale par le dispositif D,
b) La grille de diamètre plus petit soudée à l'étape a) est maintenue à sa mi-longueur par un support mobile (50) et la grille de diamètre supérieur est enfilée à l'horizontale, sur une longueur L non nulle, autour de la grille interne,
c) Le moyen mécanique (60) est introduit au moins en partie dans l'espace interne de la grille de diamètre plus petit de façon à maintenir celle-ci dans la position dont elle bénéficie lorsqu'elle est soutenue par le support mobile et on retire ledit support mobile,
d) La grille de diamètre supérieur est enfilée à l'horizontale jusqu'au fond supérieur (10) et soudée à celle-ci ;
e) Les grilles restantes de l'adsorbeur radial sont assemblées concentriquement autour de la grille de diamètre supérieur; et
f1) Une virole externe (9) est positionnée autour des grilles soudées, puis le fond inférieur (11) est soudé à la virole (9); ou
f2) Une virole externe (9), à laquelle on a préalablement soudé le fond inférieur (11), est positionnée autour des grilles soudées.

9. Procédé selon la revendication 8, **caractérisé en ce qu'**entre les étapes e) et f1) ou f2), les grilles sont fixées à une base inférieure (8).

10. Procédé selon l'une des revendications 1 à 9, **caractérisé en ce qu'**un raidisseur (90) est fixé à au moins une grille pendant au moins une partie de la construction de manière à limiter la flexibilité de la grille.

11. Procédé selon l'une des revendications 6 à 10, **caractérisé en ce que** tout au long de l'enfilage des grilles, la flèche de chacune des dites grilles est inférieure à 20 cm, de préférence inférieure à 10 cm.

## Patentansprüche

1. Verfahren zur Montage mindestens eines Radialadsorbers, der mindestens zwei konzentrische, mit Löchern durchsetzte Gitter, einen oberen Boden (10), einen unteren Boden (11) und einen zylindrischen Mantelschuss (9) mit der gleichen Achse wie die Gitter umfasst, **dadurch gekennzeichnet, dass** die mit Löchern durchsetzten Gitter konzentrisch horizontal montiert werden.

2. Verfahren zur Montage, nach Anspruch 1, mindestens eines Radialadsorbers, der als Montageteil eine untere Basis (8) umfasst, bei dem ein Verbund verwendet wird, der mindestens eine Vorrichtung D umfasst, die von einem Träger (100) und mindestens einem mit dem Träger (100) fest verbundenen Sockel (101) gebildet ist, und mindestens ein Hebemittel (201) verwendet wird, bei dem
- der Sockel (101) dergestalt ist, dass auf dem Sockel ein Montageteil eines Radialadsorbers befestigt werden kann,
- das Hebemittel dafür ausgelegt ist, die Gitter des Radialadsorbers, in horizontaler Position, gegen das auf dem Sockel (101) befestigte Montageteil zu positionieren, derart, dass das horizontale Verschweißen des Gitters mit der Basis ermöglicht wird, und
- der Träger (100) dafür ausgelegt ist, das Gitter horizontal freitragend zu halten, wenn das Gitter mit der unteren Basis verschweißt wird, umfassend die folgenden Schritte:
a) die Gitter des Radialadsorbers werden konzentrisch mittels des Hebemittels (201) in horizontaler Position gegen die untere Basis (8) positioniert und horizontal mit der Basis verschweißt, um eine verschweißte Einheit aus unterer Basis und Gittern zu bilden, die durch die Vorrichtung D horizontal freitragend gehalten wird; und
b1) ein äußerer Mantelschuss (9) wird um die in Schritt a) verschweißten Gitter herum positioniert, und dann werden der untere (11) und der obere Boden (10) mit dem Mantelschuss (9) verschweißt; oder
b2) ein äußerer Mantelschuss (9), mit dem zuvor der obere Boden (10) verschweißt wurde, wird um die in Schritt a) verschweißten Gitter herum positioniert, und dann wird der untere Boden (11) mit dem Mantelschuss verschweißt.

3. Verfahren zur Montage, nach Anspruch 1, mindestens eines Radialadsorbers, der als Montageteil den unteren Boden (11) umfasst, bei dem ein Verbund verwendet wird, der mindestens eine Vorrichtung D umfasst, die von einem Träger (100) und mindestens einem mit dem Träger (100) fest verbundenen Sockel (101) gebildet ist, und mindestens ein Hebemittel (201) verwendet wird, bei dem
- der Sockel (101) dergestalt ist, dass auf dem Sockel ein Montageteil eines Radialadsorbers befestigt werden kann,
- das Hebemittel dafür ausgelegt ist, die Gitter des Radialadsorbers, in horizontaler Position, gegen das auf dem Sockel (101) befestigte Montageteil zu positionieren, derart, dass das horizontale Verschweißen des Gitters mit der Basis ermöglicht wird, und
- der Träger (100) dafür ausgelegt ist, das Gitter horizontal freitragend zu halten, wenn das Gitter mit der unteren Basis verschweißt wird, umfassend die folgenden Schritte:
a) die Gitter des Radialadsorbers werden konzentrisch mittels des Hebemittels (201) in horizontaler Position gegen den unteren Boden (11) positioniert und horizontal mit dem Boden verschweißt, um eine verschweißte Einheit aus unterem Boden (11) und Gittern zu bilden, die durch die Vorrichtung D horizontal freitragend gehalten wird; und
b1) ein äußerer Mantelschuss (9) wird um die in Schritt a) verschweißten Gitter herum positioniert, und dann wird der obere Boden (10) mit dem Mantelschuss (9) verschweißt; oder
b2) ein äußerer Mantelschuss (9), mit dem zuvor der obere Boden (10) verschweißt wurde, wird um die in Schritt a) verschweißten Gitter herum positioniert.

4. Verfahren zur Montage, nach Anspruch 1, mindestens eines Radialadsorbers, der als Montageteil den oberen Boden (10) umfasst, bei dem ein Verbund verwendet wird, der mindestens eine Vorrichtung D umfasst, die von einem Träger (100) und mindestens einem mit dem Träger (100) fest verbundenen Sockel (101) gebildet ist, und mindestens ein Hebemittel (201) verwendet wird, bei dem
- der Sockel (101) dergestalt ist, dass auf dem Sockel ein Montageteil eines Radialadsorbers befestigt werden kann,
- das Hebemittel dafür ausgelegt ist, die Gitter des Radialadsorbers, in horizontaler Position, gegen das auf dem Sockel (101) befestigte Montageteil zu positionieren, derart, dass das horizontale Verschweißen des Gitters mit der Basis ermöglicht wird, und
- der Träger (100) dafür ausgelegt ist, das Gitter horizontal freitragend zu halten, wenn das Gitter mit der unteren Basis verschweißt wird, umfassend die folgenden Schritte:
a) die Gitter des Radialadsorbers werden konzentrisch mittels des Hebemittels (201) in horizontaler Position gegen den oberen Boden (10) positioniert und horizontal mit dem Boden verschweißt, um eine verschweißte Einheit aus oberem Boden (10) und Gittern zu bilden, die durch die Vorrichtung D horizontal freitragend gehalten wird; und
b1) ein äußerer Mantelschuss (9) wird um die in Schritt a) verschweißten Gitter herum positioniert, und dann wird der untere Boden (11) mit dem Mantelschuss (9) verschweißt; oder
b2) ein äußerer Mantelschuss (9), mit dem zuvor der untere Boden (11) verschweißt wurde, wird um die in Schritt a) verschweißten Gitter herum positioniert.

5. Verfahren nach Anspruch 4, **dadurch gekennzeichnet, dass** zwischen den Schritten a) und b1) oder b2) die Gitter an einer unteren Basis (8) befestigt werden.

6. Verfahren zur Montage, nach Anspruch 1, mindestens eines Radialadsorbers, der als Montageteil eine untere Basis (8) umfasst, bei dem ein Verbund verwendet wird, der mindestens eine Vorrichtung D umfasst, die von einem Träger (100) und mindestens einem mit dem Träger (100) fest verbundenen Sockel (101) gebildet ist, und mindestens ein Hebemittel (201), ein beweglicher Träger (50) und ein mechanisches Mittel (60) verwendet wird, bei dem
- der Sockel (101) dergestalt ist, dass auf dem Sockel ein Montageteil eines Radialadsorbers befestigt werden kann,
- das Hebemittel dafür ausgelegt ist, die Gitter des Radialadsorbers, in horizontaler Position, gegen das auf dem Sockel (101) befestigte Montageteil zu positionieren, derart, dass das horizontale Verschweißen des Gitters mit der Basis ermöglicht wird, und
- der Träger (100) dafür ausgelegt ist, das Gitter horizontal freitragend zu halten, wenn das Gitter mit der unteren Basis verschweißt wird,
- der bewegliche Träger (50) dafür ausgelegt ist, ein Gitter eines Radialadsorbers zu stützen, das an einem Ende durch die Vorrichtung D getragen wird und eine Höhe von mehr als 10 m hat;
- und das mechanische Mittel (60) dafür ausgelegt ist, in den inneren Raum eines Gitters eines Radialadsorbers in horizontaler Position eingeführt zu werden und dieses zu stützen, umfassend die folgenden Schritte:
a) das Gitter mit dem kleineren Durchmesser des Radialadsorbers wird mittels des Hebemittels (201) in horizontaler Position gegen die untere Basis (8) positioniert und horizontal mit der Basis verschweißt, um eine verschweißte Einheit aus unterer Basis (8) und Gittern zu bilden, die durch die Vorrichtung D horizontal freitragend gehalten wird,
b) das Gitter mit dem kleineren Durchmesser, das in Schritt a) verschweißt wurde, wird in der Hälfte seiner Länge durch einen beweglichen Träger (50) gehalten, und das Gitter mit dem größeren Durchmesser wird horizontal, über eine Länge ungleich Null, um das innere Gitter herum aufgesteckt,
c) das mechanische Mittel (60) wird zumindest teilweise in den inneren Raum des Gitters mit dem kleineren Durchmesser eingeführt, derart, dass dieses in der Position gehalten wird, die es hat, wenn es durch den beweglichen Träger gestützt wird, und der bewegliche Träger wird entfernt,
d) das Gitter mit dem größeren Durchmesser wird horizontal bis zu der unteren Basis (8) aufgesteckt und mit dieser verschweißt;
e) die übrigen Gitter des Radialadsorbers werden konzentrisch um das Gitter mit dem größeren Durchmesser herum montiert und
f1) ein äußerer Mantelschuss (9) wird um die verschweißten Gitter herum positioniert, und dann werden der untere (11) und der obere Boden (10) mit dem Mantelschuss (9) verschweißt; oder
f2) ein äußerer Mantelschuss (9), mit dem zuvor der obere Boden (10) verschweißt wurde, wird um die verschweißten Gitter herum positioniert, und dann wird der untere Boden (11) mit dem Mantelschuss verschweißt.

7. Verfahren zur Montage, nach Anspruch 1, mindestens eines Radialadsorbers, der als Montageteil einen unteren Boden (11) umfasst, bei dem ein Verbund verwendet wird, der mindestens eine Vorrichtung D umfasst, die von einem Träger (100) und mindestens einem mit dem Träger (100) fest verbundenen Sockel (101) gebildet ist, und mindestens ein Hebemittel (201), ein beweglicher Träger (50) und ein mechanisches Mittel (60) verwendet wird, bei dem
- der Sockel (101) dergestalt ist, dass auf dem Sockel ein Montageteil eines Radialadsorbers befestigt werden kann,
- das Hebemittel dafür ausgelegt ist, die Gitter des Radialadsorbers, in horizontaler Position, gegen das auf dem Sockel (101) befestigte Montageteil zu positionieren, derart, dass das horizontale Verschweißen des Gitters mit der Basis ermöglicht wird, und
- der Träger (100) dafür ausgelegt ist, das Gitter horizontal freitragend zu halten, wenn das Gitter mit der unteren Basis verschweißt wird,
- der bewegliche Träger (50) dafür ausgelegt ist, ein Gitter eines Radialadsorbers zu stützen, das an einem Ende durch die Vorrichtung D getragen wird und eine Höhe von mehr als 10 m hat;
- und das mechanische Mittel (60) dafür ausgelegt ist, in den inneren Raum eines Gitters eines Radialadsorbers in horizontaler Position eingeführt zu werden und dieses zu stützen, umfassend die folgenden Schritte:
a) das Gitter mit dem kleineren Durchmesser des Radialadsorbers wird mittels des Hebemittels (201) in horizontaler Position gegen den unteren Boden (11) positioniert und horizontal mit dem Boden verschweißt, um eine verschweißte Einheit aus unterem Boden (11) und Gittern zu bilden, die durch die Vorrichtung D horizontal freitragend gehalten wird,
b) das Gitter mit dem kleineren Durchmesser, das in Schritt a) verschweißt wurde, wird in der Hälfte seiner Länge durch einen beweglichen Träger (50) gehalten, und das Gitter mit dem größeren Durchmesser wird horizontal, über eine Länge ungleich Null, um das innere Gitter herum aufgesteckt,
c) das mechanische Mittel (60) wird zumindest teilweise in den inneren Raum des Gitters mit dem kleineren Durchmesser eingeführt, derart, dass dieses in der Position gehalten wird, die es hat, wenn es durch den beweglichen Träger gestützt wird, und der bewegliche Träger wird entfernt,
d) das Gitter mit dem größeren Durchmesser wird horizontal bis zu dem unteren Boden (11) aufgesteckt und mit diesem verschweißt;
e) die übrigen Gitter des Radialadsorbers werden konzentrisch um das Gitter mit dem größeren Durchmesser herum montiert und
f1) ein äußerer Mantelschuss (9) wird um die verschweißten Gitter herum positioniert, und dann wird der obere Boden (10) mit dem Mantelschuss (9) verschweißt; oder
f2) ein äußerer Mantelschuss (9), mit dem zuvor der obere Boden (10) verschweißt wurde, wird um die verschweißten Gitter herum positioniert.

8. Verfahren zur Montage, nach Anspruch 1, mindestens eines Radialadsorbers, der als Montageteil einen oberen Boden (10) umfasst, bei dem ein Verbund verwendet wird, der mindestens eine Vorrichtung D umfasst, die von einem Träger (100) und mindestens einem mit dem Träger (100) fest verbundenen Sockel (101) gebildet ist, und mindestens ein Hebemittel (201), ein beweglicher Träger (50) und ein mechanisches Mittel (60) verwendet wird, bei dem
- der Sockel (101) dergestalt ist, dass auf dem Sockel ein Montageteil eines Radialadsorbers befestigt werden kann,
- das Hebemittel dafür ausgelegt ist, die Gitter des Radialadsorbers, in horizontaler Position, gegen das auf dem Sockel (101) befestigte Montageteil zu positionieren, derart, dass das horizontale Verschweißen des Gitters mit der Basis ermöglicht wird, und
- der Träger (100) dafür ausgelegt ist, das Gitter horizontal freitragend zu halten, wenn das Gitter mit der unteren Basis verschweißt wird,
- der bewegliche Träger (50) dafür ausgelegt ist, ein Gitter eines Radialadsorbers zu stützen, das an einem Ende durch die Vorrichtung D getragen wird und eine Höhe von mehr als 10 m hat;
- und das mechanische Mittel (60) dafür ausgelegt ist, in den inneren Raum eines Gitters eines Radialadsorbers in horizontaler Position eingeführt zu werden und dieses zu stützen, und umfassend die folgenden Schritte:
a) das Gitter mit dem kleineren Durchmesser des Radialadsorbers wird mittels des Hebemittels (201) in horizontaler Position gegen den oberen Boden (10) positioniert und horizontal mit dem Boden verschweißt, um eine verschweißte Einheit aus oberem Boden (10) und Gittern zu bilden, die durch die Vorrichtung D horizontal freitragend gehalten wird,
b) das Gitter mit dem kleineren Durchmesser, das in Schritt a) verschweißt wurde, wird in der Hälfte seiner Länge durch einen beweglichen Träger (50) gehalten, und das Gitter mit dem größeren Durchmesser wird horizontal, über eine Länge L ungleich Null, um das innere Gitter herum aufgesteckt,
c) das mechanische Mittel (60) wird zumindest teilweise in den inneren Raum des Gitters mit dem kleineren Durchmesser eingeführt, derart, dass dieses in der Position gehalten wird, die es hat, wenn es durch den beweglichen Träger gestützt wird, und der bewegliche Träger wird entfernt,
d) das Gitter mit dem größeren Durchmesser wird horizontal bis zu dem oberen Boden (10) aufgesteckt und mit diesem verschweißt;
e) die übrigen Gitter des Radialadsorbers werden konzentrisch um das Gitter mit dem größeren Durchmesser herum montiert und
f1) ein äußerer Mantelschuss (9) wird um die verschweißten Gitter herum positioniert, und dann wird der untere Boden (11) mit dem Mantelschuss (9) verschweißt; oder
f2) ein äußerer Mantelschuss (9), mit dem zuvor der untere Boden (11) verschweißt wurde, wird um die verschweißten Gitter herum positioniert.

9. Verfahren nach Anspruch 8, **dadurch gekennzeichnet, dass** zwischen den Schritten e) und f1) oder f2) die Gitter an einer unteren Basis (8) befestigt werden.

10. Verfahren nach einem der Ansprüche 1 bis 9, **dadurch gekennzeichnet, dass** ein Versteifungselement (90) an mindestens einem Gitter während mindestens eines Teils der Montage befestigt wird, derart, dass die Flexibilität des Gitters beschränkt wird.

11. Verfahren nach einem der Ansprüche 6 bis 10, **dadurch gekennzeichnet, dass** während des gesamten Aufsteckens der Gitter der Ausleger jedes der Gitter kleiner als 20 cm, vorzugsweise kleiner als 10 cm ist.

## Claims

1. Method for assembling at least one radial adsorber comprising at least two concentric perforated gratings, a top end plate (10), a bottom end plate (11) and a cylindrical shell (9) with the same axis as said gratings, **characterised in that** said perforated gratings are assembled concentrically with the horizontal.

2. Method for assembling, according to claim 1, at least one radial adsorber comprising a lower base (8) as an assembly part, wherein an assembly is used that comprises a device D consisting of a support (100) and at least one plinth (101) rigidly connected to said support (100), and at least one lifting means (201), wherein:
- said plinth (101) is such that an assembly part of a radial adsorber can be fixed to said plinth;
- said lifting means are capable of positioning said gratings of said radial adsorber in the horizontal position against said assembly part fixed to said plinth (101) so as to facilitate the horizontal welding of said grating to said base, and
- said support (100) is capable of holding said grating cantilevered in the horizontal when said grating is welded to said lower base, said method comprising the steps of:
a) concentrically positioning, by means of said lifting means (201), said gratings of said radial adsorber in the horizontal position against said lower base (8) and welding said gratings horizontal to said base so as to form a welded "lower base - gratings" assembly held cantilevered in the horizontal by said device D; and
b1) positioning an external shell (9) around said gratings welded in step a), then welding said bottom (11) and top (10) end plates to said shell (9); or
b2) positioning an external shell (9), to which said top end plate (10) has previously been welded, around said gratings welded in step a), then welding said bottom end plate (11) to said shell.

3. Method for assembling, according to claim 1, at least one radial adsorber comprising said bottom end plate (11) as an assembly part, wherein an assembly is used that comprises a device D consisting of a support (100) and at least one plinth (101) rigidly connected to said support (100), and at least one lifting means (201), wherein:
- said plinth (101) is such that an assembly part of a radial adsorber can be fixed to said plinth;
- said lifting means are capable of positioning said gratings of said radial adsorber in the horizontal position against said assembly part fixed to said plinth (101) so as to facilitate the horizontal welding of said grating to said base, and
- said support (100) is capable of holding said grating cantilevered in the horizontal when said grating is welded to said lower base, said method comprising the steps of:
a) concentrically positioning, by means of said lifting means (201), said gratings of said radial adsorber in the horizontal position against said bottom end plate (11) and welding said gratings horizontal to said end plate so as to form a welded "bottom end plate (11) - gratings" assembly held cantilevered in the horizontal by said device D; and
b1) positioning an external shell (9) around said gratings welded in step a), then welding said top end plate (10) to said shell (9); or
b2) positioning an external shell (9), to which said top end plate (10) has previously been welded, around said gratings welded in step a).

4. Method for assembling, according to claim 1, at least one radial adsorber comprising said top end plate (10) as an assembly part, wherein an assembly is used that comprises a device D consisting of a support (100) and at least one plinth (101) rigidly connected to said support (100), and at least one lifting means (201), wherein:
- said plinth (101) is such that an assembly part of a radial adsorber can be fixed to said plinth;
- said lifting means are capable of positioning said gratings of said radial adsorber in the horizontal position against said assembly part fixed to said plinth (101) so as to facilitate the horizontal welding of said grating to said base, and
- said support (100) is capable of holding said grating cantilevered in the horizontal when said grating is welded to said lower base, said method comprising the steps of:
a) concentrically positioning, by means of said lifting means (201), said gratings of said radial adsorber in the horizontal position against said top end plate (10) and welding said gratings horizontal to said end plate so as to form a welded "top end plate (10) - gratings" assembly held cantilevered in the horizontal by said device D; and
b1) positioning an external shell (9) around said gratings welded in step a), then welding said bottom end plate (11) to said shell (9); or
b2) positioning an external shell (9), to which said bottom end plate (11) has previously been welded, around said gratings welded in step a).

5. Method according to claim 4, **characterised in that**, between steps a) and b1) or b2), said gratings are fixed to a lower base (8).

6. Method for assembling, according to claim 1, at least one radial adsorber comprising a lower base (8) as an assembly part, wherein an assembly is used that comprises a device D consisting of a support (100) and at least one plinth (101) rigidly connected to said support (100), and at least one lifting means (201), a movable support (50) and mechanical means (60), wherein:
- said plinth (101) is such that an assembly part of a radial adsorber can be fixed to said plinth;
- said lifting means are capable of positioning said gratings of said radial adsorber in the horizontal position against said assembly part fixed to said plinth (101) so as to facilitate the horizontal welding of said grating to said base, and
- said support (100) is capable of holding said grating cantilevered in the horizontal when said grating is welded to said lower base;
- said movable support (50) is capable of supporting a grating of a radial adsorber supported at one end by said device D and with a height of more than 10 m;
- and said mechanical means (60) are capable of being introduced into the internal space of a grating of a radial adsorber in the horizontal position and of supporting said radial adsorber, said method comprising the steps of:
a) positioning, by means of said lifting means (201), the smaller-diameter grating of said radial adsorber in the horizontal position against said lower base (8) and welding said grating horizontal to said base so as to form a welded "lower base (8) - gratings" assembly held cantilevered in the horizontal by said device D;
b) holding said smaller-diameter grating welded in step a) at its mid-length by a movable support (50) and threading the larger-diameter grating in the horizontal, over a non-zero length L, around the internal grating;
c) introducing said mechanical means (60) at least partly into the internal space of said smaller-diameter grating so as to hold said grating in the position it maintains when it is supported by said movable support, and removing said movable support;
d) threading said larger-diameter grating in the horizontal up to said lower base (8) and welding said larger-diameter grating to said lower base;
e) concentrically assembling the remaining gratings of said radial adsorber around said larger-diameter grating; and
f1) positioning an external shell (9) around the welded gratings, then welding said bottom (11) and top (10) end plates to said shell (9); or
f2) positioning an external shell (9), to which said top end plate (10) has previously been welded, around the welded gratings, then welding said bottom end plate (11) to said shell.

7. Method for assembling, according to claim 1, at least one radial adsorber comprising a bottom end plate (11) as an assembly part, wherein an assembly is used that comprises a device D consisting of a support (100) and at least one plinth (101) rigidly connected to said support (100), and at least one lifting means (201), a movable support (50) and mechanical means (60), wherein:
- said plinth (101) is such that an assembly part of a radial adsorber can be fixed to said plinth;
- said lifting means are capable of positioning said gratings of said radial adsorber in the horizontal position against said assembly part fixed to said plinth (101) so as to facilitate the horizontal welding of said grating to said base; and
- said support (100) is capable of holding said grating cantilevered in the horizontal when said grating is welded to said lower base;
- said movable support (50) is capable of supporting a grating of a radial adsorber supported at one end by said device D and with a height of more than 10 m;
- and said mechanical means (60) are capable of being introduced into the internal space of a grating of a radial adsorber in the horizontal position and of supporting said radial adsorber, said method comprising the steps of:
a) positioning, by means of said lifting means (201), the smaller-diameter grating of said radial adsorber in the horizontal position against said bottom end plate (11) and welding said grating horizontal to said end plate so as to form a welded "bottom end plate (11) - gratings" assembly held cantilevered in the horizontal by said device D;
b) holding said smaller-diameter grating welded in step a) at its mid-length by a movable support (50) and threading the larger-diameter grating in the horizontal, over a non-zero length L, around the internal grating;
c) introducing said mechanical means (60) at least partly into the internal space of said smaller-diameter grating so as to hold said grating in the position it maintains when it is supported by said movable support, and removing said movable support;
d) threading said larger-diameter grating in the horizontal up to said bottom end plate (11) and welding said larger-diameter grating to said bottom end plate;
e) concentrically assembling the remaining gratings of said radial adsorber around said larger-diameter grating; and
f1) positioning an external shell (9) around the welded gratings, then welding said top end plate (10) to said shell (9); or
f2) positioning an external shell (9), to which said top end plate (10) has previously been welded, around the welded gratings.

8. Method for assembling, according to claim 1, at least one radial adsorber comprising a top end plate (10) as an assembly part, wherein an assembly is used that comprises a device D consisting of a support (100) and at least one plinth (101) rigidly connected to said support (100), and at least one lifting means (201), a movable support (50) and mechanical means (60), wherein:
- said plinth (101) is such that an assembly part of a radial adsorber can be fixed to said plinth;
- said lifting means are capable of positioning said gratings of said radial adsorber in the horizontal position against said assembly part fixed to said plinth (101) so as to facilitate the horizontal welding of said grating to said base, and
- said support (100) is capable of holding said grating cantilevered in the horizontal when said grating is welded to said lower base;
- said movable support (50) is capable of supporting a grating of a radial adsorber supported at one end by said device D and with a height of more than 10 m;
- and said mechanical means (60) are capable of being introduced into the internal space of a grating of a radial adsorber in the horizontal position and of supporting said radial adsorber, said method comprising the steps of:
a) positioning, by means of said lifting means (201), the smaller-diameter grating of said radial adsorber in the horizontal position against said top end plate (10) and welding said grating horizontal to said end plate so as to form a welded "top end plate (10) - gratings" assembly held cantilevered in the horizontal by said device D;
b) holding said smaller-diameter grating welded in step a) at its mid-length by a movable support (50) and threading the larger-diameter grating in the horizontal, over a non-zero length L, around the internal grating;
c) introducing said mechanical means (60) at least partly into the internal space of said smaller-diameter grating so as to hold said grating in the position it maintains when it is supported by said movable support and removing said movable support;
d) threading said larger-diameter grating in the horizontal up to said top end plate (10) and welding said larger-diameter grating to said top end plate;
e) concentrically assembling the remaining gratings of said radial adsorber around said larger-diameter grating; and
f1) positioning an external shell (9) around the welded gratings, then welding said bottom end plate (11) to said shell (9); or
f2) positioning an external shell (9), to which said bottom end plate (11) has previously been welded, around the welded gratings.

9. Method according to claim 8, **characterised in that**, between steps e) and f1) or f2), the gratings are fixed to a lower base (8).

10. Method according to any one of claims 1 to 9, **characterised in that** a stiffener (90) is fixed to at least one grating during at least part of the construction so as to limit the flexibility of said grating.

11. Method according to any one of claims 6 to 10, **characterised in that**, throughout the threading of the gratings, the deflection of each of said gratings is less than 20 cm, preferably less than 10 cm.
